# EUROPEAN PATENT SPECIFICATION

(11) **EP 4 501 524 B1**
(45) Date of publication and mention of the grant of the patent: **28.10.2026**
(21) Application number: 23774933.8
(22) Date of filing: 22.03.2023
(51) Int. Cl.: B23K 26/364, B23K 26/00, B23K 26/08, B23K 26/12, B23K 26/046, B23K 26/082, B23K 26/352, B23K 26/356, C21D 8/12

(54) **STEEL SHEET PROCESSING APPARATUS AND STEEL SHEET PROCESSING METHOD**
GERÄT ZUR VERARBEITUNG VON STAHLBLECHEN UND VERFAHREN ZUR VERARBEITUNG VON STAHLBLECHEN
APPAREIL DE TRAITEMENT DE TÔLES EN ACIER ET PROCÉDÉ DE TRAITEMENT DE TÔLES EN ACIER

(30) Priority: 24.03.2022 JP 2022049035
(43) Date of publication of application: 05.02.2025
(73) Proprietor: NIPPON STEEL CORPORATION, Chiyoda-ku Tokyo 100-8071 (JP)
(72) Inventor: SAKAI, Tatsuhiko, Tokyo 100-8071 (JP); HAMAMURA, Hideyuki, Tokyo 100-8071 (JP)
(74) Representative: Vossius & Partner Patentanwälte Rechtsanwälte mbB
(86) International application number: PCT/JP2023/011160
(87) International publication number: WO 2023/182338

(56) References cited:
- JP-A- 2008 114 248
- JP-A- 2019 512 047
- JP-A- 2019 512 047
- JP-A- 2020 514 535
- JP-A- S5 997 789
- KR-A- 20180 074 388

## Description

The present invention relates to a steel sheet processing apparatus and a steel sheet processing method, see respectively claims 1 and 5.

### [Related Art]

An electrical steel sheet that is provided as a core of a transformer and contributes to improvement in power loss is known. In a manufacturing process of such electrical steel sheet, a so-called magnetic domain control process is performed in which scanning irradiation of a laser beam focused in a direction substantially parallel to a sheet width direction is performed while passing the steel sheet at a high speed to form linear strains and grooves at certain intervals, thereby reducing iron loss. It is known that, when the magnetic domain control by forming the linear strain or groove is performed, magnetic flux density when magnetizing the steel sheet decreases, and especially in a case where a direction in which the linear groove is formed and the sheet width direction are the same, the decrease in magnetic flux density becomes remarkable.

In a case where an electrical steel sheet on which the magnetic domain control is performed is used as a wound iron core, since the steel sheet is bent at a subsequent step, if the sheet width direction and the direction of the linear groove are the same when the linear groove is formed for the magnetic domain control, stress concentration might occur in the groove when the steel sheet is bent, and the steel sheet might be fractured. Therefore, it is desirable that the direction of the linear groove and the sheet width direction are not parallel, and for example, Patent Document 1 discloses a technology in which the direction of the linear groove is inclined by about 4° with respect to the sheet width direction.

Here, when the steel sheet is irradiated with the laser beam, a part of the laser beam irradiated to the steel sheet is reflected and returns to the laser irradiation unit side, and in some cases, there is a possibility that a component in the apparatus or the laser irradiation unit itself is damaged. The possibility that a part of the laser beam is reflected and returns to the laser irradiation unit side might similarly occur not only in a case of forming the groove on the steel sheet but also in a case of forming the strain.

According to the technology disclosed in Patent Document 1, the surface of the steel sheet conveyed while being curved in contact with a surface of the support roll in a circular arc shape is irradiated with the laser beam at a position separated from a reference point by an angle of 3° to 7° along an outer circumferential surface of the support roll with an irradiation position of the laser beam passing through a central axis of the support roll as the reference point. By doing so, since the steel sheet is inclined at the position irradiated with the laser beam, it is possible to prevent the laser beam from being regularly reflected from the steel sheet to the irradiation apparatus. Patent Document 2 relates to a method and apparatus for fining magnetic grains of grainoriented electrical steel sheet by treating the steel sheet with a laser irradiation.

### [Citation List]

### [Patent Document]

[Patent Document 1]
   Published Japanese Translation No. 2019-512047 of the PCT International Publication
[Patent Document 2]
   KR 2018 0074388 A, describing the preamble of claims 1 and 5.

### [Summary of Invention]

### [Problems to be Solved by the Invention]

In a case where the steel sheet is inclined in the sheet passing direction at the irradiation position of the laser beam and the linear groove direction is inclined by about 4° from the sheet width direction, a distance from a light source point of the laser beam with which scanning irradiation is performed to the steel sheet is different at both ends in the scanning direction. Therefore, defocus might occur in the laser beam with which the steel sheet is irradiated, and stable formation of the groove and strain might be difficult. Therefore, in the technology disclosed in Patent Document 1, the support roll is inclined in such a manner that the distance from the light source point of the laser beam to the steel sheet is the same at both ends in the scanning direction. However, there is a problem that, when the support roll is inclined, not only a difference in tension is likely to occur at both ends of the steel sheet, which causes meandering when the sheet passes, but also a change in tension might occur in the sheet width direction and the steel sheet might be fractured.

The present invention has been made to solve such problem, and an object thereof is to provide a steel sheet processing apparatus and a steel sheet processing method that suppress defocus of a laser beam irradiated on a steel sheet without inclining a support roll to form uniform grooves or residual stress regions.

### [Means for Solving the Problem]

The invention is specified by the independent claims 1 and 5 respectively. Preferred embodiments are defined in the dependent claims. A first aspect of the present invention is a steel sheet processing apparatus for forming grooves or residual stress regions on a surface of a steel sheet according to claim 1, the apparatus including inter alia: one or more support rolls that are arranged so that that a rotation axis thereof is parallel to a sheet width direction of the steel sheet, and are configured to convey the steel sheet supported on an outer surface in a conveyance direction perpendicular to the sheet width direction by rotating about the rotation axis; and a laser irradiation unit that irradiates a laser beam on the surface of the steel sheet positioned in a vicinity of the support roll or between a plurality of the support rolls to form the grooves or the residual stress regions on the surface of the steel sheet. The laser irradiation unit includes: a laser output unit that outputs the laser beam with which the surface of the steel sheet is irradiated; a laser beam scanning unit that reflects the laser beam from the laser output unit and changes a propagation direction of the laser beam; a focusing optical unit that focuses the laser beam of which the propagation direction is changed by the laser scanning unit, and irradiates the surface of the steel sheet with the laser beam so as to scan the surface of the steel sheet in a scanning direction intersecting with the sheet width direction; a housing that houses the laser output unit, the laser scanning unit, and the focusing optical unit in the housing; and an angle adjustment unit that changes an angle of the housing with respect to the steel sheet. The angle adjustment unit changes the angle of the housing in a plane formed by a normal direction of the steel sheet surface and the scanning direction so that the laser beam focused by the focusing optical unit is focused on the surface of the steel sheet over a total length of a scanning line regardless of an optical path of the laser beam when the surface of the steel sheet is scanned with the laser beam. In other words, when the surface of the steel sheet is scanned with the laser beam, the angle adjustment unit changes the angle of the housing in a plane formed by a normal direction of the steel sheet surface and a scanning direction so that a distance from the focusing optical unit (light source point) to the sheet surface of the laser beam focused by the focusing optical unit is equal over the total length of the scanning region of the laser beam on the surface of the steel sheet. The laser irradiation unit irradiates the laser beam in a state in which the angle of the housing is changed by the angle adjustment unit to form grooves or residual stress regions on the surface of the steel sheet.

A second aspect of the present invention is a steel sheet processing method of forming grooves or residual stress regions on a surface of a steel sheet according to claim 5, the method comprising inter alia: using a steel sheet processing apparatus including: one or more support rolls that are arranged so that a rotation axis thereof is parallel to a sheet width direction of the steel sheet, and are configured to convey the steel sheet supported on an outer surface in a conveyance direction perpendicular to the sheet width direction by rotating about the rotation axis; and a laser irradiation unit that irradiates a laser beam on the surface of the steel sheet positioned in a vicinity of the support roll or between a plurality of support rolls to form the grooves or the residual stress regions on the surface of the steel sheet, the laser irradiation unit including a laser output unit that outputs the laser beam with which the surface of the steel sheet is irradiated, a laser scanning unit that reflects the laser beam from the laser output unit and changes a propagation direction of the laser beam, a focusing optical unit that focuses the laser beam of which the propagation direction is changed by the laser scanning unit, and irradiates the surface of the steel sheet with the laser beam so as to scan the surface of the steel sheet in a scanning direction intersecting with the sheet width direction, a housing that houses the laser output unit, the laser scanning unit, and the focusing optical unit in the housing, and an angle adjustment unit that changes an angle of the housing with respect to the steel sheet. This steel sheet processing method includes: an angle adjusting step of changing, by an angle adjustment unit, an angle of a housing in a plane formed by a normal direction of the steel sheet surface and a scanning direction so that the laser beam focused by the focusing optical unit is focused on the surface of the steel sheet regardless of an optical path of the laser beam when the surface of the steel sheet is scanned with the laser beam; and a processing step of irradiating the laser beam by the laser application unit in a state in which the angle of the housing is changed by the angle adjustment unit to form the grooves or the residual stress regions on the surface of the steel sheet.

That is, the above listed second ether aspect is a steel sheet processing method of forming grooves or residual stress regions on a surface of a steel sheet using a steel sheet processing apparatus. The steel sheet processing apparatus includes: one or more support rolls that are arranged so that a rotation axis thereof is parallel to a sheet width direction of the steel sheet, and are configured to convey the steel sheet supported on an outer surface in a conveyance direction perpendicular to the sheet width direction by rotating about the rotation axis; and a laser irradiation unit that irradiates the surface of the steel sheet positioned in a vicinity of the support roll or between a plurality of support rolls with a laser beam from a focusing optical unit to form the grooves or the residual stress regions on the surface of the steel sheet. This steel sheet processing method includes: an angle adjusting step of changing an angle of a housing of the laser irradiation unit in a plane formed by a normal direction of the steel sheet surface and a scanning direction of the laser beam so that a distance from the focusing optical unit (light source point) to the sheet surface is equal over a total length of a scanning region of the laser beam on the surface of the steel sheet when the surface of the steel sheet is scanned with the laser beam; and a processing step of irradiating the laser beam from the focusing optical unit in a state in which the angle of the housing is changed to form the grooves or the residual stress regions on the surface of the steel sheet.

### [Effects of the Invention]

The steel sheet processing apparatus according to the above listed first aspect of the present invention is provided with the angle adjustment unit that changes the angle of the housing of the laser irradiation unit with respect to the steel sheet. The angle adjustment unit changes the angle of the housing in the plane formed by the normal direction of the steel sheet surface and the scanning direction so that the laser beam is focused on the surface of the steel sheet regardless of the optical path. That is, when the surface of the steel sheet is scanned with the laser beam, the angle adjustment unit changes the angle of the housing in the plane formed by the normal direction of the steel sheet surface and the scanning direction so that a distance from the focusing optical unit to the surface of the steel sheet of the laser beam focused by the focusing optical unit is equal over the total length of the scanning region of the laser beam on the surface of the steel sheet. As a result, the laser irradiation unit irradiates the laser beam in a state in which the angle of the housing is changed by the angle adjustment unit to form grooves or residual stress regions on the surface of the steel sheet.

In this manner, since the angle of the housing with respect to the steel sheet can be changed by the angle adjustment unit without inclining the support roll, the occurrence of meandering at the time of passing the sheet can be suppressed, and the possibility that a change in tension occurs in the sheet width direction and the sheet is fractured can be reduced. Furthermore, by adjusting the angle of the housing with respect to the steel sheet by the angle adjustment unit, the laser beam emitted from the laser irradiation unit attached to the housing is focused on the surface of the steel sheet regardless of the optical path. That is, the distance from the focusing optical unit to the surface of the steel sheet is equal over the total length of the scanning region of the laser beam. Therefore, it is possible to suppress the defocus of the laser beam over the total laser beam scanning width and to form a uniform grooves or residual stress regions.

Also in the steel sheet processing method according to the above listed second aspect of the present invention, it is possible to obtain a similar effect.

### [Brief Description of the Drawings]

FIG. 1 is a view illustrating an embodiment of the present invention, and is a perspective view of a steel sheet processing apparatus that processes a steel sheet.
FIG. 2A is a configuration diagram on a YZ plane of a laser irradiation unit in FIG. 1.
FIG. 2B is a configuration diagram on an XZ plane of the laser irradiation unit in FIG. 1.
FIG. 3A is a configuration diagram of the laser irradiation unit as seen from arrow A in FIG. 1.
FIG. 3B is a configuration diagram of the laser irradiation unit as seen from arrow B in FIG. 1.
FIG. 4 is a view of the laser irradiation unit configured to be movable in a laser irradiation direction as seen from arrow A in FIG. 1.
FIG. 5 is a view of a laser irradiation unit in another aspect configured to be movable in a laser irradiation direction as seen from arrow A in FIG. 1.
FIG. 6 is a schematic configuration diagram of a steel sheet processing apparatus according to a related art.
FIG. 7 is a view for explaining a setting site of a scanning region on a steel sheet. Among them, (a) illustrates a flat site as a setting target of the scanning region in the present embodiment. On the other hand, (b) and (c) illustrate a site including an uneven curved surface that is not the setting target of the scanning region. Furthermore, (d) illustrates point-like irradiation that is not the target of the present embodiment.
FIG. 8A is a schematic configuration diagram of a steel sheet processing apparatus according to another related art. Here, (a) is a view as seen in a direction along an axis of the support roll, and (b) is a view as seen in a sheet passing direction.
FIG. 8B is a schematic configuration diagram of a steel sheet processing apparatus according to still another related art. Here, (a) is a view as seen in a direction along an axis of the support roll, and (b) is a view as seen in a sheet passing direction.
FIG. 9A is a view illustrating a case where a steel sheet floats from a support roll at one end portion in another related art, the view as seen in a sheet passing direction.
FIG. 9B is a view illustrating laser irradiation by the laser irradiation unit rotated by applying the steel sheet processing apparatus of the present embodiment in the state illustrated in FIG. 9A, the view as seen in the sheet passing direction.

### [Embodiment of the Invention]

Hereinafter, one embodiment and a modification example of the present invention will be described with reference to the drawings.

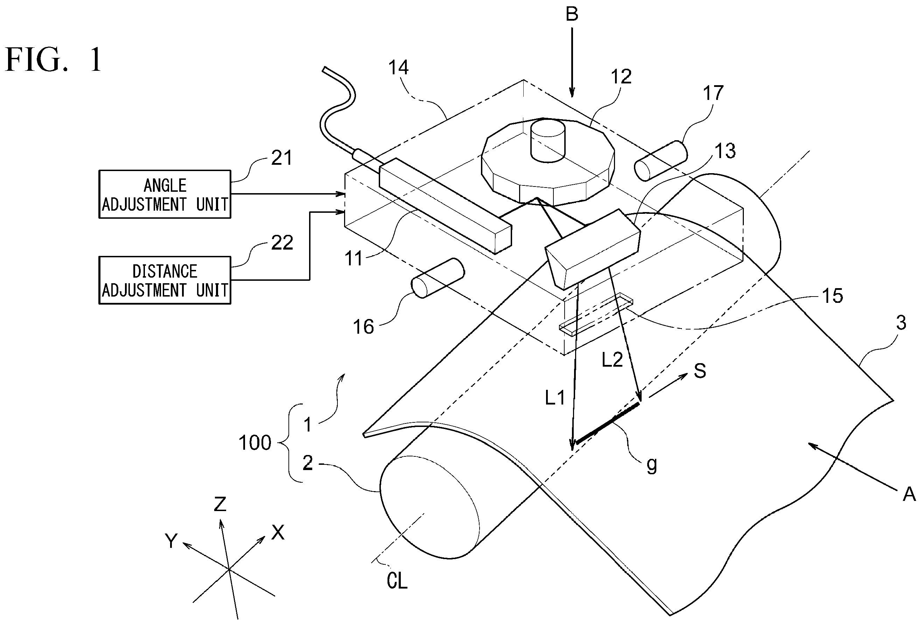

FIG. 1 is a perspective view illustrating a steel sheet processing apparatus 100 according to the present embodiment.

The steel sheet processing apparatus 100 includes a laser irradiation unit 1 and a support roll 2.

The support roll 2 is arranged in such a manner that a rotation axis CL is parallel to a sheet width direction of a steel sheet 3, and rotates about the rotation axis CL, so that the steel sheet 3 supported on an upper portion of an outer circumferential surface is passed in a conveyance direction perpendicular to the sheet width direction. Note that, the steel sheet 3 is curved by contact with a part in a circumferential direction of the outer circumferential surface of the support roll 2 to be conveyed. The support roll 2 may be one roll that supports the curved steel sheet 3, or may include a plurality of support rolls 2 that applies tension to the steel sheet 3.

The laser irradiation unit 1 focuses a laser beam on a surface of the steel sheet 3 positioned in the vicinity of the support roll 2, or on the surface of the steel sheet 3 between the support rolls 2 in a case where the support roll 2 includes a plurality of rolls, and irradiates the surface of the steel sheet 3 so as to linearly scan, thereby forming grooves or residual stress regions on the surface of the steel sheet 3. Here, arranging the support roll 2 in such a manner that the rotation axis CL thereof is parallel to the sheet width direction of the steel sheet 3 may include not only a case where the rotation axis CL of the support roll 2 completely coincides with the sheet width direction of the steel sheet 3 but also a case where they are displaced from each other by about an error with which the steel sheet 3 can be stably passed by the support roll 2.

Note that, although one laser irradiation unit 1 is illustrated in FIG. 1, a plurality of laser irradiation units 1 may be provided in the sheet width direction in a case where magnetic domain control of the steel sheet 3 is actually performed. With such a configuration, the magnetic domain control can be performed in an entire region in the sheet width direction of the steel sheet 3.

Hereinafter, a configuration of the laser irradiation unit 1 will be described in detail. The laser irradiation unit 1 includes a laser output unit 11 as a laser output unit, a laser scanning optical element 12 as a laser scanning unit, a laser beam focusing element 13 as a focusing optical unit, a housing 14, an angle adjustment unit 21, and a distance adjustment unit 22. The laser output unit 11, the laser scanning optical element 12, and the laser beam focusing element 13 (hereinafter, they are also collectively and simply referred to as optical elements) are fixed to, for example, a bottom surface of a boxshaped housing 14 in such a manner that a relative positional relationship among them is maintained. As long as the angle adjustment unit 21 and the distance adjustment unit 22 have a structure for adjusting an angle and a distance of the housing 14, various known mechanical structures can be used, and in this drawing, they are simply illustrated as functional blocks in order to simplify the description.

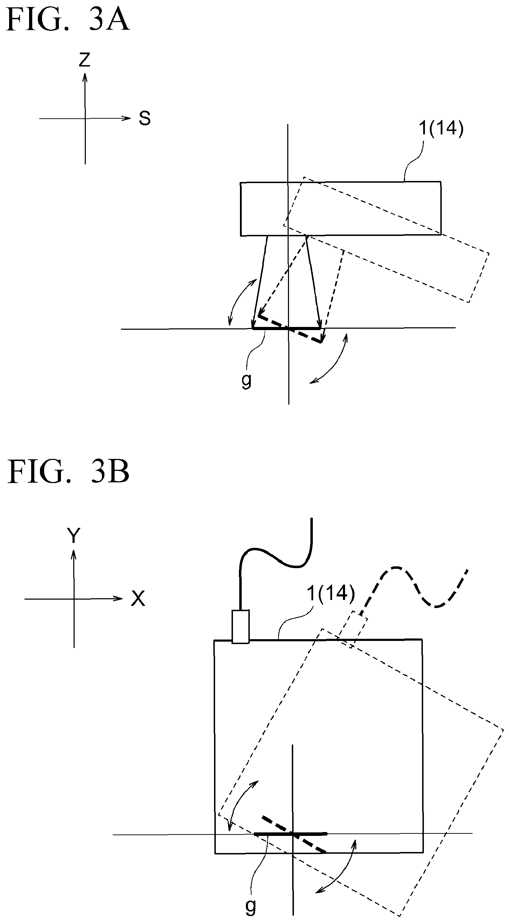

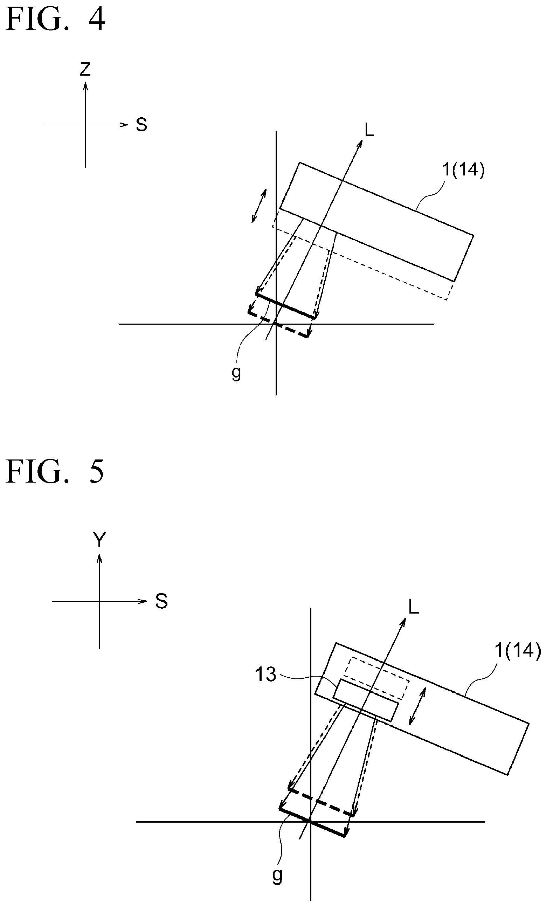

The housing 14 is provided with a laser transmission window 15, which is an opening part through which a laser is transmitted, and a supply port 16 and a discharge port 17 of an inert gas. The angle adjustment unit 21 and the distance adjustment unit 22 are mechanisms capable of adjusting the angle of the housing 14 with respect to the steel sheet 3 and the distance between the housing 14 and the steel sheet 3, respectively. An angle adjusting operation (angle adjusting step) performed by the angle adjustment unit 21 will be described with reference to FIGS. 3A and 3B to be described later, and a distance adjusting operation performed by the distance adjustment unit 22 will be described with reference to FIGS. 4 and 5 to be described later.

The laser output unit 11 outputs a laser beam transmitted from a laser device (not illustrated) provided outside the laser irradiation unit 1 through a cable. For example, the laser output unit 11 includes a collimator that forms the transmitted laser beam into a parallel beam having an elliptical or circular cross-sectional shape, and a mirror that reflects the beam formed by the collimator in an appropriate direction.

The laser scanning optical element 12 reflects the laser beam output from the laser output unit 11 and continuously changes a reflection angle thereof to scan the laser beam. For example, the laser scanning optical element 12 may be a polygon mirror, which is a regular polygonal rotation mirror provided with a plurality of reflection plane mirrors around the same, or a galvanometer mirror that vibrates the reflection direction by a galvanometer motor with one plane mirror.

The laser beam focusing element 13 focuses a scanning laser beam scanned by the laser scanning optical element 12 as, for example, circular or elliptical minute spot light at any position of positions linearly arranged in a direction intersecting with the sheet width direction on the surface of the steel sheet 3. For example, the laser beam focusing element 13 may be a linear parabolic mirror, an fθ lens, or a flat field lens. The laser beam focused by the laser beam focusing element 13 to be irradiated to the steel sheet 3 to scan is hereinafter referred to as the scanning laser beam. A region irradiated with the scanning laser beam on the surface of the steel sheet 3 is referred to as a scanning region g.

In the laser output unit 11, the laser scanning optical element 12, and the laser beam focusing element 13, focal lengths of the collimator and the focusing element, arrangement of the respective optical elements and the like are determined in such a manner that the scanning laser beam forms the scanning region g having a desired focusing shape on the steel sheet 3. The desired focusing shape is a shape of the circular or elliptical minute spot light, and is determined so as to be suitable for performing the magnetic domain control in accordance with characteristics of the electrical steel sheet in accordance with a scanning speed, laser power and the like. For example, in a case where a groove having a depth of about 20 µm is formed, in a case where the scanning speed is 20 m/s and the laser power is 1000 W, a diameter of the focusing shape is about 50 µm. Note that, this focusing shape is an example and is not limited thereto; the focusing shape is not limited to a circular shape or an elliptical shape, and may be other shapes.

The housing 14 is provided with the laser transmission window 15 through which the scanning laser beam output from the laser beam focusing element 13 can be transmitted. For example, the laser transmission window 15 is an opening formed into a slit shape with a minimum size through which the scanning laser beam can be transmitted. Note that, the housing 14 may also be referred to as a laser irradiation box or simply as a unit.

Furthermore, the housing 14 is provided with the supply port 16 and the discharge port 17 of the inert gas. By adjusting a supply amount of the inert gas to the supply port 16 and a discharge amount of the inert gas from the discharge port 17, the inside of the housing 14 is filled with the inert gas. The inert gas supplied into the housing 14 is also discharged from the laser transmission window 15 formed into the slit shape in addition to the discharge port 17.

Here, when the grooves or the residual stress regions is formed on the steel sheet 3 by the scanning laser beam, dust might be generated on the surface of the steel sheet 3. The dust is a melt of an electrical steel sheet base metal and a component of surface coating generated by processing of the steel sheet 3, and is specifically metal powder such as iron, silicon, and magnesium. Even by using a dust collecting device, it is difficult to completely collect the dust, so that the dust spreads around the laser irradiation unit 1. When the generated dust adheres to a surface of the optical element, the adhered substance absorbs the laser light to generate heat, optical strain occurs in the optical element, and light focusing performance might be deteriorated or reflectance and transmittance might decrease. An absorbed amount of the laser light by the adhered substance to the optical element further increases as the adhered substance is oxidized.

In the present embodiment, the inside of the housing 14 is filled with the inert gas, and an air pressure is set to a positive pressure than an external pressure. The inert gas is a gas that does not contain oxygen and hardly causes oxidation or other chemical reactions, and is, for example, nitrogen or a rare gas such as argon or helium. By forming the housing 14 in this manner, the housing 14 is filled with the inert gas and has the positive pressure, and an inflow of air containing oxygen and dust into the housing 14 is prevented; as a result, adhesion of foreign matter to the surface of the optical element is suppressed. Furthermore, even if the foreign matter adheres to the surface, cleaning is easy, so that a life of the optical element can be extended. Note that, a measuring device that monitors oxygen concentration and pressure may be attached in the housing 14. In this case, an inflow of air from the outside may be monitored, and the supply amount of the inert gas from the supply port 16 may be increased when the inflow is detected.

Since the laser transmission window 15 from which the scanning laser beam is emitted is made the opening in the slit shape, the inert gas in the housing 14 is discharged from the laser transmission window 15. With this configuration, the inert gas flows out of the laser transmission window 15 toward the outside of the housing 14, and the flow can prevent the dust and air from flowing into the housing 14 through the laser transmission window 15. The laser transmission window 15 may further include a dust filter in the opening part, thereby further suppressing the inflow of the dust into the housing 14. Note that, the measuring device that monitors oxygen concentration and pressure may be attached in the housing 14. In this case, an inflow of air from the outside may be monitored, and the supply amount of the inert gas from the supply port 16 may be increased when the inflow is detected.

As another aspect, instead of the opening in the slit shape, the laser transmission window 15 may be configured to block the inflow and outflow of the gas between the inside and outside of the housing 14 through a window part formed of a member through which the scanning laser beam can be transmitted. The window part of the laser transmission window 15 may be a member provided with a non-reflective coating that suppresses reflection and absorption with respect to a wavelength of the laser light.

As still another aspect, it is possible that the supply port 16 and the discharge port 17 are not provided. In a case where the laser transmission window 15 isolates the inside and outside of the housing 14 and the supply port 16 and the discharge port 17 are not provided, the housing 14 is sealed in a state of being filled with the inert gas. This can prevent the inflow of air containing oxygen and dust into the housing 14. Since a range in which outside air and dust is blocked is limited to a relatively narrow range in the housing 14, the isolation can be easily performed.

Furthermore, by installing the measuring device that monitors the oxygen concentration and the pressure to the housing 14, the inflow of air from the outside and a decrease in pressure of the inert gas may be detected. In a case where the inflow of air or the decrease in pressure is detected, the inert gas may be replaced or filled in the housing 14.

In the vicinity of the laser transmission window 15 of the housing 14, in order to prevent dust flying from the laser irradiation unit from entering the laser transmission window 15, a gas injection nozzle for forcibly excluding dust by spraying air or inert gas to a laser processing unit may be provided. A dust suction device that forcibly collects dust may be provided in the vicinity of the processing unit.

The present inventors conducted a long-term test regarding a structure in which the housing 14 is completely shielded from the outside air, and compared a case where the inside is filled with air and a case where the inside is filled with nitrogen to exclude oxygen and CO₂. As a result, in a case where the inside was filled with air, fogging (white turbidity) occurred on an inner lens and a mirror surface, and transmittance and reflectance of the laser light decreased by about several %. This fogging could not be completely removed by cleaning with alcohol, and the optical component had to be replaced. On the other hand, in a case of filling with nitrogen, a slight turbidity phenomenon was similarly observed on the lens or the mirror surface, but this could be eliminated by cleaning, and there was no deterioration in transmittance or reflectance.

As a result of further detailed experimental evaluation, it was found that, when the oxygen concentration inside the box was set to 1% or lower, a remarkable white turbidity suppression effect was observed, and a slight white turbidity could be easily removed by cleaning. The white turbidity is considered to be caused by adhesion of a small amount of dust remaining inside the box to the mirror surface and closely adhered due to an oxidation reaction caused by absorption of the laser light. Therefore, in addition to sealing the box, filling the inside with the inert gas such as nitrogen or argon to suppress the oxygen concentration to 1% or lower is effective in maintaining performance of the optical component for a long period of time.

Hereinafter, the positional relationship of the respective optical elements in the housing 14 will be described. Note that, in the following description, the positional relationship will be described using each of XYZ-axes and an S-axis illustrated in FIG. 1. The X-axis indicates a direction parallel to the rotation axis CL of the support roll 2 in a columnar shape, the Z-axis indicates a vertical direction, and the Y-axis indicates a sheet passing direction of the steel sheet 3. The Z-axis in the vertical direction indicates a normal direction with respect to a sheet passing surface of the steel sheet 3. Note that, the sheet passing surface of the steel sheet 3 indicates a surface of the steel sheet 3 at a vertex of the steel sheet 3 supported by the support roll 2 and a surface of a portion not inclined by the support roll 2 of the steel sheet 3 that is passed. Therefore, the normal direction on the sheet passing surface of the steel sheet 3 corresponds to the vertical direction. The S-axis indicates a scanning direction of the scanning laser beam. The laser irradiation unit 1 has an angle adjustment function capable of rotating the housing 14; the rotation will be described in detail with reference to FIGS. 3A and 3B, which are views as seen from A and B in FIG. 1, respectively.

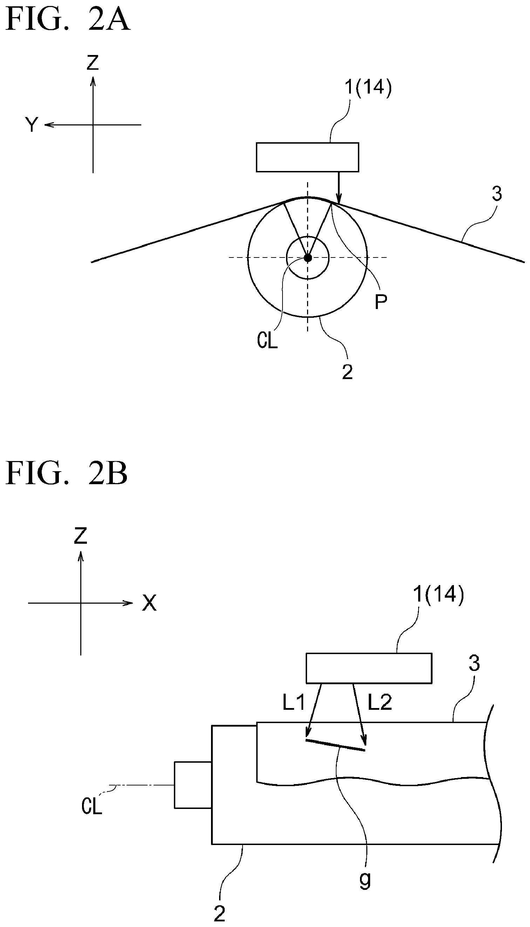

FIG. 2A is a view illustrating a YZ plane as seen in an X-axis direction in FIG. 1. As illustrated in FIG. 2A, the steel sheet 3 comes into contact with the support roll 2 along a circular arc centered on an upper vertex in a Z-axis direction in a cross-sectional direction thereof. A contact section between the support roll 2 and the steel sheet 3 has a circular arc shape in the YZ plane and extends in the direction of the rotation axis CL (X-axis). Of these contact section, a contact section on an upstream side in the sheet passing direction (Y-axis negative side) is referred to as P. The scanning laser beam output from the laser irradiation unit 1 indicated by an arrow irradiates a position spaced apart from the contact section P on the upstream side in the sheet passing direction (Y-axis negative side).

In this manner, by irradiating a position separated on the upstream side of the contact section P in the sheet passing direction with the scanning laser beam, the surface of the steel sheet 3 does not face an incident direction of the scanning laser beam. As a result, reflected light from the steel sheet 3 does not directly propagate toward the laser irradiation unit 1, so that damage of the laser irradiation unit 1 can be prevented. Furthermore, since an irradiation site of the scanning laser beam is close to the contact section P, vibration of the steel sheet 3 at the irradiation site of the scanning laser beam is small, and defocus due to the vibration can be suppressed.

FIG. 2B is a view illustrating an XZ plane as seen in a Y-axis direction in FIG. 1. As illustrated in FIG. 2B, the S-axis in the scanning direction of the scanning laser beam is inclined with respect to the X-axis in the sheet width direction of the steel sheet 3. Therefore, in the scanning region g of the scanning laser beam on the steel sheet 3, distances L1 and L2 from both ends in the scanning direction to an irradiation source of the scanning laser beam are not equal to each other, and a difference occurs. When the distance from the irradiation source of the scanning laser beam to the steel sheet 3 changes in the scanning direction in this manner, there is a possibility that the defocus occurs and a stable groove and thermal strain are not formed over an entire width of the scanning region g.

Therefore, the laser irradiation unit 1 includes the angle adjustment unit 21 that rotates the housing 14 to adjust the rotation angle thereof. The angle adjustment unit 21 according to the present embodiment adjusts the angles of two types of rotations as illustrated in FIGS. 3A and 3B, for example. By the rotation in a ZS plane as illustrated in FIG. 3A, the distance between the laser irradiation unit 1 and the steel sheet 3 can be adjusted in such a manner that a focal position of the irradiated scanning laser beam coincides with the surface of the steel sheet 3. By the rotation in an XY plane as illustrated in FIG. 3B, the S-axis in the scanning direction of the scanning laser beam may be inclined with respect to the X-axis in the sheet width direction of the steel sheet 3.

FIG. 3A is a view as seen in a direction A (direction perpendicular to the X-axis in which a side surface of the laser irradiation unit 1 can be observed) in FIG. 1, and is an explanatory view of rotation in the ZS plane. FIG. 3B is a view as seen in a direction B (direction perpendicular to the X-axis in which an upper surface of the laser irradiation unit 1 can be observed) in FIG. 1, and is an explanatory view of rotation in the XY plane. As illustrated in these drawings, the housing 14 is configured to be independently rotatable in both the SZ plane and the XY plane.

In detail, as illustrated in FIG. 3A, the rotation of the housing 14 in the ZS plane is performed in such a manner that a center portion of the scanning region g in which the scanning laser beam is focused is the rotation center. That is, at the angle adjusting step, by rotating the housing 14 about an axis passing through a center point of the scanning region g of the scanning laser beam and perpendicular to the ZS plane, an entire laser irradiation unit 1 is rotated. By such rotation, even in a case where the steel sheet 3 is inclined in the sheet passing direction at the irradiation position of the scanning laser beam and the scanning direction of the scanning laser beam is inclined from the sheet width direction, the scanning laser beam can be focused on the surface of the steel sheet 3 regardless of an optical path as a processing step following the angle adjusting step. Here, since a rotation center of the housing 14 is set at the position of the center point between one end and the other end of the scanning region g, the control of rotating the housing 14 according to the set scanning region g can be more easily and accurately performed as compared with a case where the rotation center is set at a position displaced from the center point on the one end side or the other end side.

Note that, a specific configuration example of the angle adjustment unit 21 that implements the angle adjustment by such rotation is as follows. The angle adjustment unit 21 may include a pair of fulcrums opposed to each other across the center point of the scanning region g in an axial direction (front-to-back direction of the drawing) passing through the center point of the scanning region g and perpendicular to the ZS plane, a fixing plate that fixes a bottom surface of the laser irradiation unit 1 and extends in the axial direction, and arm portions that connect the pair of fulcrums and both end portions of the fixing plate in the axial direction. The angle adjustment unit 21 is not limited to such a configuration, and may have any configuration as long as the housing 14 can be rotated about an axis passing through the center point of the scanning region g and perpendicular to the ZS plane.

As illustrated in FIG. 2B, since the scanning direction (S-axis) of the scanning laser beam is inclined with respect to the sheet width direction (X-axis), there is a difference between the distances L1 and L2 from the irradiation source of the scanning laser beam to both ends of the scanning region g of the steel sheet 3. When the distance from the irradiation source to the steel sheet 3 changes in the scanning direction, there is a possibility that the defocus occurs and intended groove and thermal strain are not formed over an entire width in the scanning direction of the scanning region g. Therefore, by integrally inclining the housing 14 in the ZS plane using a rotation mechanism by the angle adjustment unit 21, the focal position can coincide with the surface of the steel sheet 3 over the entire width in the scanning direction of the scanning region g in such a manner that L1 and L2 are equal and there is no difference therebetween.

Furthermore, as illustrated in FIG. 3B, the housing 14 is configured to be rotatable also in the XY plane. Also in the rotation in the XY plane, the center portion of the scanning region g is the rotation center. That is, the housing 14 has a function that the entire laser irradiation unit 1 rotates about an axis passing through the center portion of the scanning region g of the scanning laser beam and perpendicular to the XY plane. By such rotation, the scanning direction of the scanning laser beam may be inclined with respect to the sheet width direction of the steel sheet 3.

By rotation of the laser irradiation unit 1 in the XY plane in this manner, the irradiation scanning direction (S-axis) of the scanning laser beam is adjusted to have a desired angle with respect to the sheet width direction (X-axis). Here, the desired angle is desirably 4° or larger and 10° or smaller in order to reduce deterioration in magnetic flux density of the electrical steel sheet and increase an iron loss improving effect in the magnetic domain control in which the groove is formed and to suppress fracture in bending when used as a core, and is desirably larger than 0° and 10° or smaller in order to increase the iron loss improving effect in the magnetic domain control in which the thermal strain is formed.

Note that, as a method of controlling the angle adjustment unit 21 to optimally set the rotation (inclination) angle of the housing 14, for example, a laser telemeter may be installed at each of both ends of the scanning line to measure the distances L1 and L2, and the rotation (inclination) of the housing 14 may be adjusted so that the lengths L1 and L2 have the same value. Alternatively, in the portion irradiated with the scanning laser beam on the steel sheet 3, emission intensity of generated dust or melt droplet (spatter) of the base metal may be observed with a camera, and the rotation (inclination) of the housing 14 may be adjusted by controlling the angle adjustment unit 21 so that the light emission intensity becomes uniform.

In this manner, according to the laser irradiation unit 1 of the present embodiment, since arrangement of the laser output unit 11, the laser scanning optical element 12, and the laser beam focusing element 13 that determine the focused shape and a scanning width of the laser beam is fixed in the housing 14, the focused shape and scanning width are not affected even if the housing 14 is integrally rotated and inclined. Furthermore, since the housing 14 has a function of rotating in the entire laser irradiation unit 1 about an axis passing through the center of the scanning area g and perpendicular to the ZS plane, it is possible to prevent a difference between the distances L1 and L2 from the irradiation source of the scanning laser beam to both ends of the scanning region g of the steel sheet 3 from occurring without inclining the support roll 2. As a result, since the focal position coincides with the surface of the steel sheet 3 over the entire width of the scanning region g while suppressing the occurrence of meandering at the time of sheet passing, a uniform grooves or residual stress regions can be formed.

Conventionally, in a case where a problem occurs in the focusing shape, the scanning width and the like, even if it is attempted to adjust the focusing shape or the scanning width by adjusting any one of the laser output unit 11, the laser scanning optical element 12, and the laser beam focusing element 13 forming the optical element, the remaining two are affected, and it has been difficult to adjust them; however, by integrating such optical elements as the laser irradiation unit 1, the adjustment can be made easy.

Since the housing 14 rotates in such a manner that the center portion of the scanning region g becomes the rotation center, it is possible to correct the defocus over the entire width in the scanning direction of the scanning region g only by the rotation adjustment.

Furthermore, the laser irradiation unit 1 of the present embodiment includes the distance adjustment unit 22 in addition to the angle adjustment unit 21. According to the adjustment by the distance adjustment unit 22, the rotation center of the housing 14 can more accurately coincide with the scanning region g, and correction can be performed even if there is some defocus. As illustrated in FIG. 4 or 5, the distance adjustment unit 22 adjusts the position of the housing 14 or the laser beam focusing element 13 so that a light source point of the scanning laser beam moves with respect to the steel sheet 3 in a laser irradiation direction L. Note that, in a case where the laser beam focusing element 13 is a focusing reflection mirror such as a parabolic mirror, the laser irradiation direction L is an axis passing through the center of the scanning line of the laser beam on the mirror surface and the center of the scanning line on the steel sheet, and in a case where the laser beam focusing element 13 is a lens such as an fθ lens, the laser irradiation direction L is an axis passing through the center of the scanning line of the laser beam on the lens surface and the center of the scanning line on the steel sheet.

FIG. 4 is a view as seen in the direction A in FIG. 1, and is an explanatory view of movement in the SZ plane. As illustrated in this drawing, an entire housing 14 is configured to be movable along the L axis, which is the irradiation direction of the scanning laser beam. With such a configuration, the focal position of the scanning laser beam can be further adjusted along the L axis, so that the rotation center of the housing 14 can coincide with the center portion of the scanning region g. That is, the focal point of the scanning laser beam can coincide with the surface of the steel sheet 3.

Note that, a specific configuration example of the distance adjustment unit 22 that implements such angle adjustment is as follows. The distance adjustment unit 22 may be formed of a guide along the L axis in the irradiation direction of the scanning laser beam, and a fixing table configured to be movable along the guide and fixes the housing 14 or the laser beam focusing element 13. The distance adjustment unit 22 is not limited to such a configuration, and may have any configuration as long as the housing 14 or the laser beam focusing element 13 can be moved along the L axis in the irradiation direction of the scanning laser beam.

In order to make the light source point of the scanning laser beam movable with respect to the steel sheet 3, the laser irradiation unit 1 may be configured as in FIG. 5. FIG. 5, similarly to FIG. 4, is a view as seen in the direction A in FIG. 1, and is an explanatory view of movement in the SZ plane. As illustrated in this drawing, the laser beam focusing element 13 in the housing 14 is configured to be movable along the L axis. Even with such a configuration, the focal position of the scanning laser beam can be adjusted along the L axis, so that the focal point can easily coincide with the surface of the steel sheet 3.

When the beam focusing element 13 is focused on the sheet surface over a total length of the scanning region g, the laser output unit 11 and the laser scanning optical element 12 are fixed to the housing 14, so that it is not necessary to adjust the angle and position, and the laser beam focusing element 13 only needs to adjust the movement in the L direction. Therefore, the focus can be easily adjusted, and the position and angle of the optical element do not fluctuate due to surrounding vibration, heat and the like, and stable processing can be performed.

Alternatively, a configuration having both the adjustment function in FIG. 4 and the adjustment function in FIG. 5 may be adopted as another configuration.

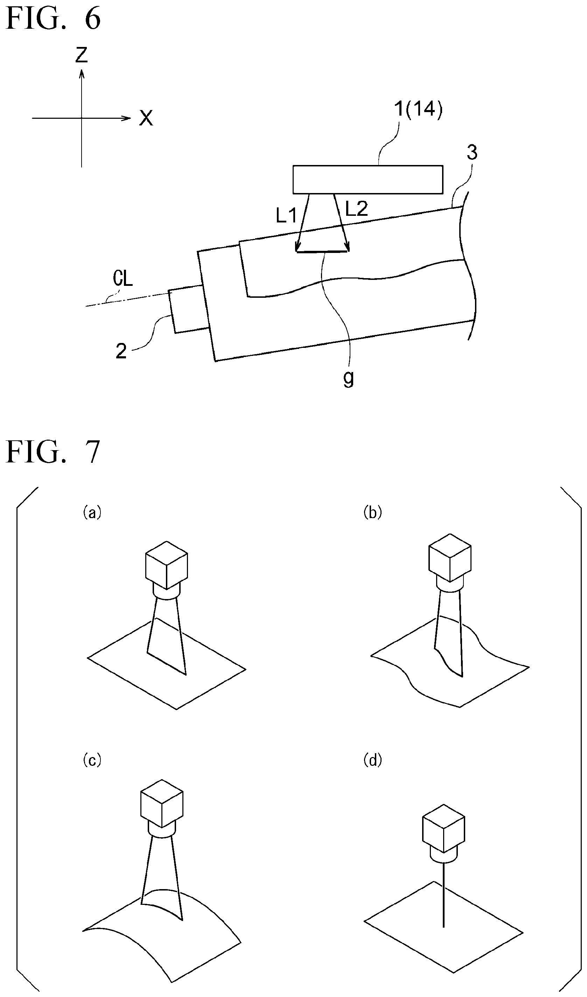

FIG. 6 is a related art different from the present embodiment, and illustrates a method of making the distances L1 and L2 from the light source point of the scanning laser beam to both ends of the scanning region g on the steel sheet 3 the same. As illustrated in this drawing, the support roll 2 is inclined in order to make L1 and L2 the same. However, when the support roll 2 is inclined, the sheet passing becomes unstable, which might lead to meandering or fracture of the steel sheet 3. On the other hand, according to the present embodiment, not the steel sheet 3 but the entire laser irradiation unit 1 is rotated by the angle adjustment unit 21, so that the positional relationship between the support roll 2 and the steel sheet 3 does not change, and thus, it is possible to reduce the possibility of meandering or fracture of the steel sheet 3.

In this manner, according to the present embodiment, the angle adjustment unit 21 that changes the angle of the housing 14 of the laser irradiation unit 1 with respect to the steel sheet 3 is provided, and the angle of the housing 14 is changed by the angle adjustment unit 21 so that the laser beam is focused on the surface of the steel sheet 3 regardless of the optical path. That is, when the surface of the steel sheet 3 is scanned with the laser beam, the angle adjustment unit 21 changes the angle of the housing 14 in the ZS plane formed by the normal direction (Z-axis direction) of the steel sheet 3 and the scanning direction (S-axis direction) so that the distance from the beam focusing element 13 (light source point) to the surface of the steel sheet 3 of the scanning laser beam focused by the beam focusing element 13 becomes equal over the total length of the scanning region g of the scanning laser beam on the surface of the steel sheet 3. At that time, for example, in a case where one end and the other end of the scanning region g are seen, the distances L1 and L2 are equal to each other.

As described above, as a result of making the distance from the beam focusing element 13 (light source point) to the surface of the steel sheet 3 equal at each position over the total length of the scanning region g of the scanning laser beam, the defocus of the scanning laser beam is suppressed over the entire scanning width on the surface of the steel sheet 3, so that uniform grooves or residual stress regions can be formed.

Note that, as a supplement, in the present embodiment, as illustrated in FIG. 7(a), the scanning region g is set by selecting a site where a flat surface is obtained on the steel sheet 3 being passed. Then, by scanning with the laser beam in a state in which the position of the laser irradiation unit 1 is fixed at a fixed position without being moved with respect to the set scanning region g, uniform grooves or residual stress regions with respect to the scanning region g is formed.

On the other hand, as illustrated in FIG. 7(b) or FIG. 7(c), a site of a concavely curved surface or a convexly curved surface on the steel sheet 3 includes a portion with defocus in the scanning region g, so that this is not a setting target of the scanning region g.

In FIG. 7(d), the laser irradiation unit itself moves a point-shaped irradiation position while moving the laser irradiation unit itself, and does not perform the scanning with the laser beam, so that this is not subjected to the present embodiment.

### (Modification Example)

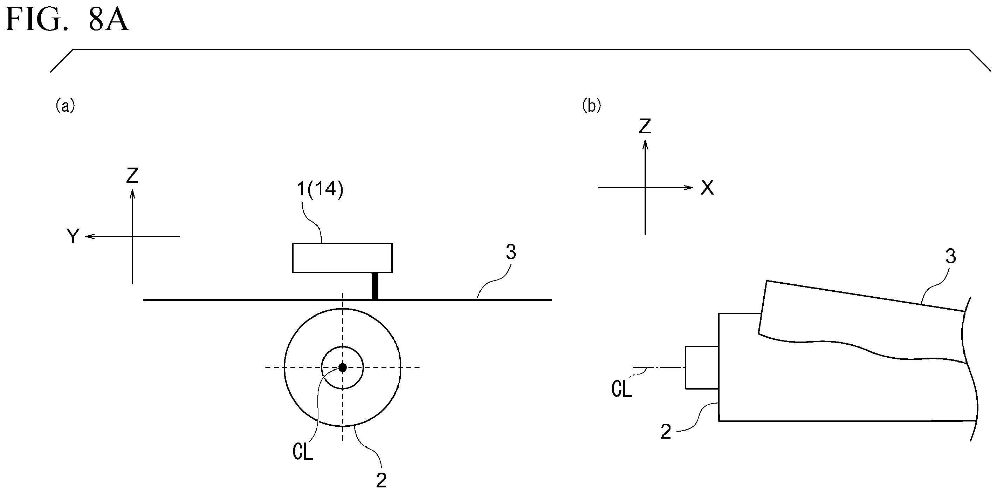

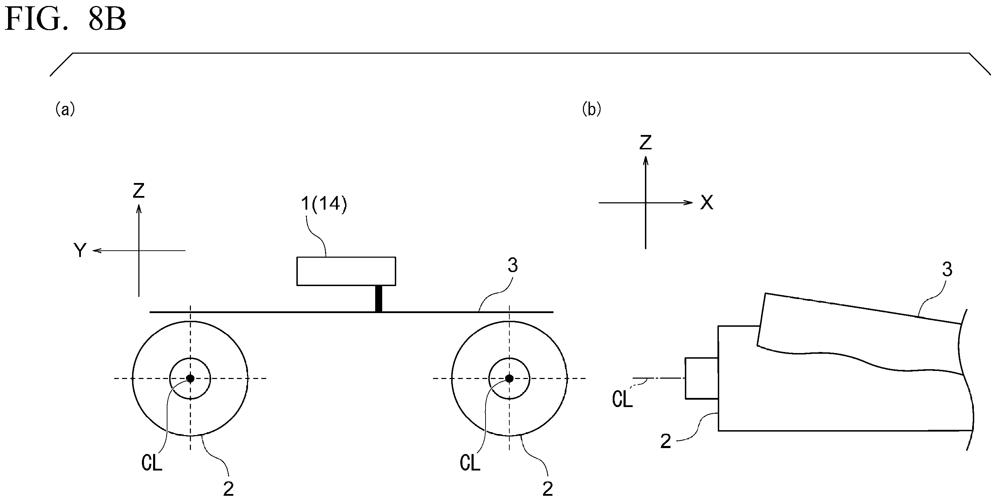

FIGS. 8A and 8B illustrate a method of passing a steel sheet 3 in another related art different from the present embodiment. An example illustrated in FIG. 8A is a case where the steel sheet 3 is conveyed flatly on a support roll 2 without being curved due to contact with a part in a circumferential direction of an outer circumferential surface of the support roll 2, a case where the steel sheet 3 is conveyed in a state of floating from the support roll 2 at one end portion of the support roll 2 in an X-axis direction due to a defective shape of the steel sheet 3 and non-uniformity of balance of tension applied to the sheet (that is, a case where the steel sheet 3 is conveyed in a manner inclined in the X direction).

An example illustrated in FIG. 8B is a case where a laser irradiation unit 1 is provided between a plurality of support rolls 2, a case where the steel sheet 3 is conveyed in a state of floating from the support roll 2 at one end portion of the support roll 2 in the X-axis direction for a reason similar to that in the case of FIG. 8A.

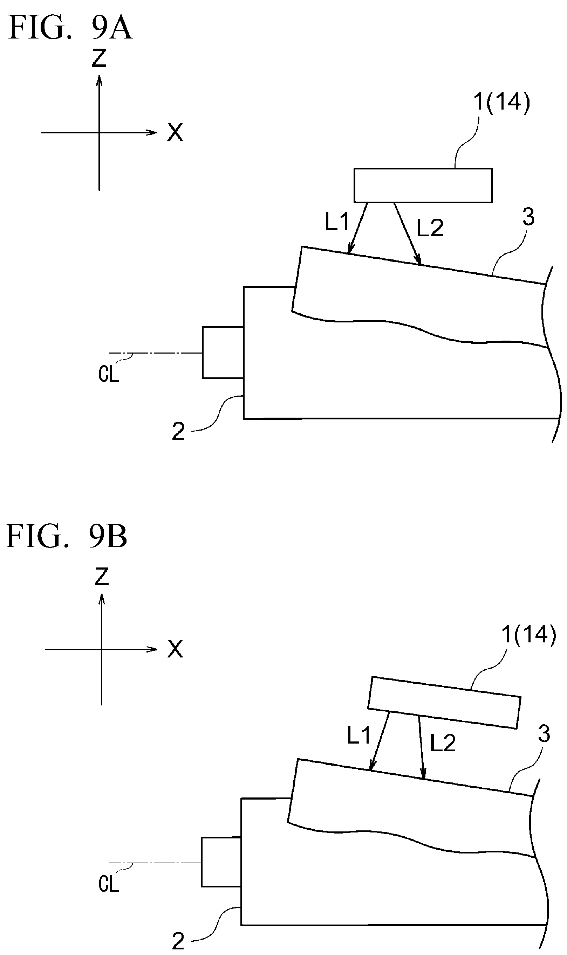

In these cases, since the steel sheet 3 is conveyed in a state of being inclined in a sheet width direction, even if a scanning direction (S-axis) of a scanning laser beam is set to be parallel to the sheet width direction (X-axis), as illustrated in FIG. 9A, a difference occurs between distances L1 and L2 from a light source point of the scanning laser beam to both ends of a scanning region g on the steel sheet 3, and formation of a groove and thermal strain on a scanning line become unstable.

When the steel sheet processing apparatus of the present embodiment is applied in a state in which the formation of the groove and thermal strain on the scanning line is unstable as illustrated in FIG. 9A, the laser irradiation unit 1 is rotated by the angle adjustment unit 21 as illustrated in FIG. 9B, so that even in a case where the steel sheet 3 is inclined in the sheet width direction, the focal position of the scanning laser beam can stably coincide on the surface of the steel sheet 3 by rotating the laser irradiation unit 1, and as a result, light can be focused on the surface of the steel sheet 3 regardless of the optical path of the laser beam. That is, the distance from the beam focusing element 13 to the surface of the steel sheet 3 is equal over the total length of the scanning region g of the scanning laser beam on the surface of the steel sheet 3.

In this manner, the steel sheet processing apparatus and the steel sheet processing method of the present embodiment can be applied to the processing of the steel sheet 3 at the position between the pair of support rolls 2 described with reference to FIG. 8B in addition to the processing on the inclined surface of the steel sheet 3 at the position in the vicinity of the support roll 2 described with reference to FIG. 2A and the like.

The present invention is not limited to the configurations and steps of the above-described embodiment and various modification examples, and may be appropriately modified as necessary. The above-described embodiment and various modification examples are for describing the present invention, and do not limit the scope of the present invention. That is, the scope of the present invention is indicated not by the embodiments but by the appended claims.

### [Field of Industrial Application]

According to the above-described embodiment and various modification examples of the present invention, it is possible to provide a steel sheet processing apparatus and a steel sheet processing method of forming uniform grooves or residual stress regions by suppressing defocus of a laser beam with which a steel sheet is irradiated. Therefore, industrial applicability is significant.

### [Brief Description of the Reference Symbols]

1 Laser irradiation unit
2 Support roll
3 Steel sheet
11 Laser output unit (laser output unit)
12 Laser scanning optical element (laser scanning unit)
13 Laser beam focusing element (laser scanning unit)
14 Housing
15 Laser transmission window
16 Supply port
17 Discharge port
21 Angle adjustment unit
22 Distance adjustment unit
100 Steel sheet processing device
CL Rotation axis
g Scanning region
L1, L2 Distance

## Claims

1. A steel sheet processing apparatus (100) for forming grooves or residual stress regions on a surface of a steel sheet (3), the apparatus (100) comprising:
one or more support rolls (2) that are arranged so that a rotation axis (CL) thereof is parallel to a sheet width direction of the steel sheet (3), and are configured to convey the steel sheet (3) supported on an outer surface in a conveyance direction perpendicular to the sheet width direction by rotating about the rotation axis (CL); and
a laser irradiation unit configured to irradiate a laser beam on the surface of the steel sheet (3) positioned in a vicinity of the support roll (2) or between the support rolls (2) to form the grooves or the residual stress regions on the surface of the steel sheet (3),
the laser irradiation unit including:
a laser output unit (11) configured to output the laser beam with which the surface of the steel sheet (3) is irradiated;
a laser scanning unit (12) configured to reflect the laser beam from the laser output unit (11) and to change a propagation direction of the laser beam;
a focusing optical unit (13) configured to focus the laser beam of which the propagation direction is changed by the laser scanning unit (12), and to irradiate the surface of the steel sheet (3) with the laser beam so as to scan the surface of the steel sheet (3) in a scanning direction intersecting with the sheet width direction;
a housing (14) housing the laser output unit (11), the laser scanning unit (12), and the focusing optical unit (13) in the housing (14); and
the steel sheet processing apparatus being **characterized by**:
an angle adjustment unit (21) configured to change an angle of the housing (14) with respect to the steel sheet (3), wherein
the angle adjustment unit (21) is configured to change the angle of the housing (14) in a plane formed by a normal direction of the steel sheet surface and the scanning direction so that a distance of the laser beam focused by the focusing optical unit (13) from the focusing optical unit (13) to the surface of the steel sheet (3) is equal over a total length of a scanning region (g) of the laser beam on the surface of the steel sheet (3) when the surface of the steel sheet (3) is scanned with the laser beam, and
the laser irradiation unit is configured to irradiate the laser beam in a state in which the angle of the housing (14) is changed by the angle adjustment unit (21) to form the grooves or the residual stress regions on the surface of the steel sheet (3).

2. The apparatus (100) according to Claim 1, comprising
a distance adjustment unit (22) configured to move the housing (14) or the focusing optical unit (13) in an irradiation direction of the laser beam to the steel sheet (3) to change the distance from the focusing optical unit (13) to the steel sheet (3), wherein
when scanning the surface of the steel sheet (3) with the laser beam, the distance adjustment unit (22) is configured to change the distance from the focusing optical unit (13) to the steel sheet (3) in the irradiation direction of the laser beam so that the distance from the focusing optical unit (13) to the surface of the steel sheet (3) is equal over the total length of the scanning region (g) of the laser beam focused by the focusing optical unit (13).

3. The apparatus (100) according to Claim 1 or 2, wherein
the housing (14) includes a laser transmission window (15) that transmits the laser beam,
the focusing optical unit (13) is configured to focus and irradiate the laser beam on the surface of the steel sheet (3) through the laser transmission window (15), and
the housing (14) is filled with an inert gas.

4. The apparatus (100) according to Claim 1 or 2, wherein
the housing (14) includes a laser transmission window (15) that transmits the laser beam,
the focusing optical unit (13) is configured to focus and irradiate the laser beam on the surface of the steel sheet (3) through the laser transmission window (15), and
an inside of the housing (14) is isolated from atmosphere outside the housing (14) and is filled with an inert gas.

5. A steel sheet processing method of forming grooves or residual stress regions on a surface of a steel sheet (3) using a steel sheet processing apparatus (100),
the steel sheet processing apparatus (100) including:
one or more support rolls (2) that are arranged so that a rotation axis (CL) thereof is parallel to a sheet width direction of the steel sheet (3), and are configured to convey the steel sheet (3) supported on an outer surface in a conveyance direction perpendicular to the sheet width direction by rotating about the rotation axis (CL); and
a laser irradiation unit that irradiates a laser beam on the surface of the steel sheet (3) positioned in a vicinity of the support roll (2) or between a plurality of the support rolls (2) from a focusing optical unit (13) to form the grooves or the residual stress regions on the surface of the steel sheet (3),
**characterized in that** the steel sheet processing method comprises:
an angle adjusting step of changing an angle of a housing (14) of the laser irradiation unit in a plane formed by a normal direction of the steel sheet surface and a scanning direction of the laser beam so that a distance from the focusing optical unit (13) to the surface of the steel sheet (3) is equal over a total length of a scanning region (g) of the laser beam on the surface of the steel sheet (3) when the surface of the steel sheet (3) is scanned with the laser beam; and
a processing step of irradiating the laser beam from the focusing optical unit (13) in a state in which the angle of the housing (14) is changed to form the grooves or the residual stress regions on the surface of the steel sheet (3).

## Patentansprüche

1. Stahlblech-Bearbeitungsvorrichtung (100) zur Bildung von Rillen oder Restspannungsbereichen auf einer Oberfläche eines Stahlblechs (3), wobei die Vorrichtung (100) aufweist:
eine oder mehrere Stützwalzen (2), die so angeordnet sind, dass eine Drehachse (CL) davon parallel zu einer Blechbreitenrichtung des Stahlblechs (3) ist, und so konfiguriert sind, dass sie das auf einer Außenfläche gestützte Stahlblech (3) in einer Förderrichtung senkrecht zur Blechbreitenrichtung durch Drehung um die Drehachse (CL) fördern; und
eine Laserbestrahlungseinheit, die so konfiguriert ist, dass sie einen Laserstrahl auf die Oberfläche des Stahlblechs (3) abstrahlt, das in einer Umgebung der Stützwalze (2) oder zwischen den Stützwalzen (2) positioniert ist, um die Rillen oder die Restspannungsbereiche auf der Oberfläche des Stahlblechs (3) zu bilden,
wobei die Laserbestrahlungseinheit aufweist:
eine Laserausgabeeinheit (11), die so konfiguriert ist, dass sie den Laserstrahl ausgibt, mit dem die Oberfläche des Stahlblechs (3) bestrahlt wird;
eine Laserabtasteinheit (12), die so konfiguriert ist, dass sie den Laserstrahl von der Laserausgabeeinheit (11) reflektiert und eine Ausbreitungsrichtung des Laserstrahls ändert;
eine optische Fokussiereinheit (13), die so konfiguriert ist, dass sie den Laserstrahl fokussiert, dessen Ausbreitungsrichtung durch die Laserabtasteinheit (12) geändert ist, und die Oberfläche des Stahlblechs (3) mit dem Laserstrahl bestrahlt, um die Oberfläche des Stahlblechs (3) in einer Abtastrichtung abzutasten, die die Blechbreitenrichtung schneidet;
ein Gehäuse (14), das die Laserausgabeeinheit (11), die Laserabtasteinheit (12) und die optische Fokussiereinheit (13) im Gehäuse (14) unterbringt; und
wobei die Stahlblech-Bearbeitungsvorrichtung **gekennzeichnet ist durch**:
eine Winkeleinstelleinheit (21), die so konfiguriert ist, dass sie einen Winkel des Gehäuses (14) in Bezug auf das Stahlblech (3) ändert, wobei die Winkeleinstelleinheit (21) so konfiguriert ist, dass sie den Winkel des Gehäuses (14) in einer Ebene ändert, die **durch** eine Normalenrichtung der Stahlblechoberfläche und die Abtastrichtung gebildet ist, so dass ein Abstand des **durch** die optische Fokussiereinheit (13) fokussierten Laserstrahls von der optischen Fokussiereinheit (13) zur Oberfläche des Stahlblechs (3) über eine Gesamtlänge eines Abtastbereichs (g) des Laserstrahls auf der Oberfläche des Stahlblechs (3) gleich ist, wenn die Oberfläche des Stahlblechs (3) mit dem Laserstrahl abgetastet wird, und
die Laserbestrahlungseinheit so konfiguriert ist, dass sie den Laserstrahl in einem Zustand abstrahlt, in dem der Winkel des Gehäuses (14) **durch** die Winkeleinstelleinheit (21) geändert wird, um die Rillen oder die Restspannungsbereiche auf der Oberfläche des Stahlblechs (3) zu bilden.

2. Vorrichtung (100) nach Anspruch 1, die aufweist:
eine Abstandseinstelleinheit (22), die so konfiguriert ist, dass sie das Gehäuse (14) oder die optische Fokussiereinheit (13) in einer Abstrahlrichtung des Laserstrahls zum Stahlblech (3) bewegt, um den Abstand von der optischen Fokussiereinheit (13) zum Stahlblech (3) zu ändern, wobei
beim Abtasten der Oberfläche des Stahlblechs (3) mit dem Laserstrahl die Abstandseinstelleinheit (22) so konfiguriert ist, dass sie den Abstand von der optischen Fokussiereinheit (13) zum Stahlblech (3) in der Abstrahlrichtung des Laserstrahls so ändert, dass der Abstand von der optischen Fokussiereinheit (13) zur Oberfläche des Stahlblechs (3) über die Gesamtlänge des Abtastbereichs (g) des durch die optische Fokussiereinheit (13) fokussierten Laserstrahls gleich ist.

3. Vorrichtung (100) nach Anspruch 1 oder 2, wobei
das Gehäuse (14) ein Laserübertragungsfenster (15) aufweist, das den Laserstrahl überträgt,
die optische Fokussiereinheit (13) so konfiguriert ist, dass sie den Laserstrahl fokussiert und über das Laserübertragungsfenster (15) auf die Oberfläche des Stahlblechs (3) abstrahlt, und
das Gehäuse (14) mit einem Inertgas gefüllt ist.

4. Vorrichtung (100) nach Anspruch 1 oder 2, wobei
das Gehäuse (14) ein Laserübertragungsfenster (15) aufweist, das den Laserstrahl überträgt,
die optische Fokussiereinheit (13) so konfiguriert ist, dass sie den Laserstrahl fokussiert und über das Laserübertragungsfenster (15) auf die Oberfläche des Stahlblechs (3) abstrahlt, und
ein Innenraum des Gehäuses (14) von der Atmosphäre außerhalb des Gehäuses (14) isoliert und mit einem Inertgas gefüllt ist.

5. Stahlblech-Bearbeitungsverfahren zur Bildung von Rillen oder Restspannungsbereichen auf einer Oberfläche eines Stahlblechs (3) mit Hilfe einer Stahlblech-Bearbeitungsvorrichtung (100),
wobei die Stahlblech-Bearbeitungsvorrichtung (100) aufweist:
eine oder mehrere Stützwalzen (2), die so angeordnet sind, dass eine Drehachse (CL) davon parallel zu einer Blechbreitenrichtung des Stahlblechs (3) ist, und so konfiguriert sind, dass sie das auf einer Außenfläche gestützte Stahlblech (3) in einer Förderrichtung senkrecht zur Blechbreitenrichtung durch Drehung um die Drehachse (CL) fördern; und
eine Laserbestrahlungseinheit, die einen Laserstrahl auf die Oberfläche des Stahlblechs (3), das in einer Umgebung der Stützwalze (2) oder zwischen mehreren der Stützwalzen (2) positioniert ist, von einer optischen Fokussiereinheit (13) abstrahlt, um die Rillen oder die Restspannungsbereiche auf der Oberfläche des Stahlblechs (3) zu bilden,
**dadurch gekennzeichnet, dass** das Stahlblech-Bearbeitungsverfahren aufweist:
einen Winkeleinstellschritt des Änderns eines Winkels eines Gehäuses (14) der Laserbestrahlungseinheit in einer Ebene, die durch eine Normalenrichtung der Stahlblechoberfläche und eine Abtastrichtung des Laserstrahls gebildet ist, so dass ein Abstand von der optischen Fokussiereinheit (13) zur Oberfläche des Stahlblechs (3) über eine Gesamtlänge eines Abtastbereichs (g) des Laserstrahls auf der Oberfläche des Stahlblechs (3) gleich ist, wenn die Oberfläche des Stahlblechs (3) mit dem Laserstrahl abgetastet wird; und
einen Bearbeitungsschritt des Abstrahlens des Laserstrahls von der optischen Fokussiereinheit (13) in einem Zustand, in dem der Winkel des Gehäuses (14) geändert wird, um die Rillen oder die Restspannungsbereiche auf der Oberfläche des Stahlblechs (3) zu bilden.

## Revendications

1. Appareil de traitement de tôles en acier (100) destiné à former des rainures ou des zones de contraintes résiduelles sur une surface d'une tôle en acier (3), l'appareil (100) comprenant :
un ou plusieurs rouleaux de support (2) qui sont agencés de sorte qu'un axe de rotation (CL) de ceux-ci est parallèle à une direction de largeur de tôle de la tôle en acier (3), et sont configurés pour transporter la tôle en acier (3) supportée sur une surface externe dans une direction de transport perpendiculaire à la direction de largeur de tôle en tournant autour de l'axe de rotation (CL) ; et
une unité d'irradiation laser configurée pour irradier un faisceau laser sur la surface de la tôle en acier (3) positionnée à proximité du rouleau de support (2) ou entre les rouleaux de support (2) afin de former les rainures ou les zones de contraintes résiduelles sur la surface de la tôle en acier (3),
l'unité d'irradiation laser comprenant :
une unité de sortie laser (11) configurée pour fournir en sortie le faisceau laser avec lequel la surface de la tôle en acier (3) est irradiée ;
une unité de balayage laser (12) configurée pour réfléchir le faisceau laser provenant de l'unité de sortie laser (11) et pour modifier une direction de propagation du faisceau laser ;
une unité optique de focalisation (13) configurée pour focaliser le faisceau laser dont la direction de propagation est modifiée par l'unité de balayage laser (12), et pour irradier la surface de la tôle en acier (3) avec le faisceau laser de manière à balayer la surface de la tôle en acier (3) dans une direction de balayage croisant la direction de largeur de tôle ;
un boîtier (14) logeant l'unité de sortie laser (11), l'unité de balayage laser (12) et l'unité optique de focalisation (13) dans le boîtier (14) ; et
l'appareil de traitement de tôles en acier étant **caractérisé par** :
une unité de réglage d'angle (21) configurée pour modifier un angle du boîtier (14) par rapport à la tôle en acier (3), l'unité de réglage d'angle (21) étant configurée pour modifier l'angle du boîtier (14) dans un plan formé par une direction normale à la surface de tôle en acier et la direction de balayage de sorte qu'une distance du faisceau laser focalisé par l'unité optique de focalisation (13) depuis l'unité optique de focalisation (13) jusqu'à la surface de la tôle en acier (3) est égale sur toute la longueur d'une région de balayage (g) du faisceau laser sur la surface de la tôle en acier (3) lorsque la surface de la tôle en acier (3) est balayée avec le faisceau laser, et
l'unité d'irradiation laser étant configurée pour irradier le faisceau laser dans un état dans lequel l'angle du boîtier (14) est modifié par l'unité de réglage d'angle (21) afin de former les rainures ou les zones de contraintes résiduelles sur la surface de la tôle en acier (3).

2. Appareil (100) selon la revendication 1, comprenant
une unité de réglage de distance (22) configurée pour déplacer le boîtier (14) ou l'unité optique de focalisation (13) dans une direction d'irradiation du faisceau laser vers la tôle en acier (3) afin de modifier la distance de l'unité optique de focalisation (13) à la tôle en acier (3), dans lequel,
lors du balayage de la surface de la tôle en acier (3) avec le faisceau laser, l'unité de réglage de distance (22) est configurée pour modifier la distance de l'unité optique de focalisation (13) à la tôle en acier (3) dans la direction d'irradiation du faisceau laser de sorte que la distance de l'unité optique de focalisation (13) à la surface de la tôle en acier (3) est égale sur toute la longueur de la région de balayage (g) du faisceau laser focalisé par l'unité optique de focalisation (13).

3. Appareil (100) selon la revendication 1 ou 2, dans lequel
le boîtier (14) comprend une fenêtre de transmission laser (15) qui transmet le faisceau laser,
l'unité optique de focalisation (13) est configurée pour focaliser et irradier le faisceau laser sur la surface de la tôle en acier (3) à travers la fenêtre de transmission laser (15), et
le boîtier (14) est rempli d'un gaz inerte.

4. Appareil (100) selon la revendication 1 ou 2, dans lequel
le boîtier (14) comprend une fenêtre de transmission laser (15) qui transmet le faisceau laser,
l'unité optique de focalisation (13) est configurée pour focaliser et irradier le faisceau laser sur la surface de la tôle en acier (3) à travers la fenêtre de transmission laser (15), et
l'intérieur du boîtier (14) est isolé de l'atmosphère extérieure au boîtier (14) et est rempli d'un gaz inerte.

5. Procédé de traitement de tôles en acier consistant à former des rainures ou des zones de contraintes résiduelles sur une surface d'une tôle en acier (3) à l'aide d'un appareil de traitement de tôles en acier (100),
l'appareil de traitement de tôles en acier (100) comprenant :
un ou plusieurs rouleaux de support (2) qui sont agencés de sorte qu'un axe de rotation (CL) de ceux-ci est parallèle à une direction de largeur de tôle de la tôle en acier (3), et sont configurés pour transporter la tôle en acier (3) supportée sur une surface externe dans une direction de transport perpendiculaire à la direction de largeur de tôle en tournant autour de l'axe de rotation (CL) ; et
une unité d'irradiation laser qui irradie un faisceau laser sur la surface de la tôle en acier (3) positionnée à proximité du rouleau de support (2) ou entre une pluralité de rouleaux de support (2) depuis une unité optique de focalisation (13) afin de former les rainures ou les zones de contraintes résiduelles sur la surface de la tôle en acier (3),
**caractérisé en ce que** le procédé de traitement de tôles en acier comprend :
une étape de réglage d'angle consistant à modifier un angle d'un boîtier (14) de l'unité d'irradiation laser dans un plan formé par une direction normale à la surface de tôle en acier et une direction de balayage du faisceau laser de sorte qu'une distance de l'unité optique de focalisation (13) à la surface de la tôle en acier (3) est égale sur toute la longueur d'une région de balayage (g) du faisceau laser sur la surface de la tôle en acier (3) lorsque la surface de la tôle en acier (3) est balayée avec le faisceau laser ; et
une étape de traitement consistant à irradier le faisceau laser depuis l'unité optique de focalisation (13) dans un état dans lequel l'angle du boîtier (14) est modifié afin de former les rainures ou les zones de contraintes résiduelles sur la surface de la tôle en acier (3).
